# EUROPÄISCHE PATENTSCHRIFT

(11) **EP 3 448 696 B1**
(45) Veröffentlichungstag und Bekanntmachung des Hinweises auf die Patenterteilung: **29.04.2020**
(21) Anmeldenummer: 17705350.1
(22) Anmeldetag: 13.02.2017
(51) Int. Cl.: B60C 11/00

(54) **FAHRZEUGLUFTREIFEN**
PNEUMATIC VEHICLE TIRE
PNEUMATIQUE DE VÉHICULE

(30) Priorität: 25.04.2016 DE 102016206974
(43) Veröffentlichungstag der Anmeldung: 06.03.2019
(73) Patentinhaber: Continental Reifen Deutschland GmbH, 30165 Hannover (DE)
(72) Erfinder: IORDANOU, Ana, 30169 Hannover (DE); OERSLER, Emine Dilhun, 30169 Hannover (DE); LUTZ, Andre, 30167 Hannover (DE); CEBIK, Frantisek, 01861 Belusa (SK)
(74) Vertreter: Finger, Karsten
(86) Internationale Anmeldenummer: PCT/EP2017/053092
(87) Internationale Veröffentlichungsnummer: WO 2017/186366

(56) Entgegenhaltungen:
- EP-A1- 2 186 655
- JP-A- 2012 076 640
- US-A1- 2011 056 603

## Beschreibung

### Fahrzeugluftreifen

Die Erfindung betrifft einen Fahrzeugluftreifen nach dem Oberbegriff des Patentanspruches 1.

Gattungsgemäße Fahrzeugluftreifen sind aus dem Stand der Technik hinlänglich bekannt. Dabei sind auch Fahrzeugluftreifen bekannt, bei denen die Unterseite der Lauffläche gewölbt ist. Weiterhin sind grundsätzlich auch Verfahren zur Runderneuerung eines Fahrzeugluftreifens bekannt.

Ein gattungsgemäßer Fahrzeugluftreifen ist beispielsweise aus der EP 2 186 655 A1 bekannt. Der Fahrzeugluftreifen weist einen Laufstreifen mit einer die Profilierung enthaltenden äußeren Laufstreifenkappe, einer inneren Laufstreifenbasis und zwei schulterseitigen Laufstreifenteilen auf, wobei die Laufstreifenkappe, die Laufstreifenbasis und die schulterseitigen Laufstreifenteilen unterschiedliche Härten aufweisen. Die Laufstreifenbasis ist, im Querschnitt betrachtet, an ihrer "Außenseite" wellenförmig ausgeführt. Ferner ist ein nicht vulkanisierter Laufstreifen zur Runderneuerung des Fahrzeugluftreifens offenbart, wobei der Laufstreifen nach der Vulkanisation auf die bereits erwähnte Weise aufgebaut bzw. ausgeführt ist. Die der Laufstreifenkappe, der Laufstreifenbasis und den schulterseitigen Laufstreifenteilen jeweils zugrundeliegende Kautschukmischung soll ein komfortables Auflegen des Laufstreifens auf den zu runderneuernden Reifen ermöglichen.

Aus der JP 2012 076 640 A ist ein weiterer Fahrzeugluftreifen mit einem Laufstreifen, welcher eine Laufstreifenkappe und eine Laufstreifenbasis aufweist, bekannt. Die Laufstreifenkappe weist einen zentralen Kappenteil und zwei schulterseitige Kappenteile auf, wobei der zentrale Kappenteil stärker komprimierbar ist, als die schulterseitigen Kappenteile, wodurch der Laufstreifen gleichmäßig abreiben soll.

Die US 2011/0056603 A1 offenbart einen Fahrzeugluftreifen, welcher einen Laufstreifen mit einer radial äußeren Schicht, einer den Gürtel kontaktierenden radial inneren Schicht und einer zwischen diesen beiden Schichten befindliche Zwischenschicht aufweist. Die Zwischenschicht ist ein dünner Film aus einem thermoplastischen Harz oder einer thermoplastischen Kautschukmischung. Zur Runderneuerung des Reifens wird der Reifen erwärmt, wodurch die Zwischenschicht erweicht und die radial äußere Laufstreifenschicht abgelöst wird.

Während eines Lebenszyklus eines Fahrzeugluftreifens besteht die größte Gefahr von Beschädigungen in der Mitte des Laufstreifens, beispielsweise durch das Eindringen von spitzen Objekten. Normalerweise ist auch der Gummiabrieb der Lauffläche in der Mitte am größten.

Weiterhin besteht das Problem der Wärmeentwicklung im Fahrbetrieb der Fahrzeugluftreifen. Die meiste Wärme entsteht im Bereich der Seitenwände an den Schultern des Fahrzeugluftreifens, da diese Bereiche beim Abrollen, in Kurvenfahrten etc. ständig und am stärksten verformt werden. Folglich ist die Wärmeabfuhr vor allem im Schulterbereich notwendig. Mangelnde Wärmeabfuhr und daraus folgend eine zu große Hitzeentwicklung im Fahrzeugluftreifen kann zum Beispiel zu Schäden in der Karkasse führen.

Die Form der Lauffläche ist durch deren Eigenschaften und Verwendung vorgegeben. Beim Runderneuern von Fahrzeugluftreifen wird die alte Lauffläche maschinell abgerauht oder abgeschält, eine neue Lauffläche aufgelegt und anschließend vulkanisiert. Hierbei besteht die Gefahr, dass zu viel von der Lauffläche abgetragen wird, sodass die darunter liegende Karkasse beschädigt wird.

Der Erfindung liegt die Aufgabe zugrunde, einen verbesserten Fahrzeugluftreifen bereitzustellen.

Die Erfindung löst diese Aufgabenstellung mit den kennzeichnenden Merkmalen des unabhängigen Patentanspruches 1.
Eine weitere Ausgestaltung der Erfindung ist Gegenstand des Unteranspruches.

Ein Fahrzeugluftreifen zumindest aufweisend: einen Laufstreifen mit einer äußeren Laufstreifenkappe mit einer profilierten Lauffläche und einer inneren Laufstreifenbasis, eine Karkasse, einen Wulstbereich mit einem Wulstkern, eine Innenschicht und Seitenwände, wurde erfindungsgemäß dahingehend verbessert, dass die Materialdicke der Laufstreifenbasis vom Zentrum der Lauffläche jeweils zu den Seitenwänden hin derart kontinuierlich abnimmt, dass die Laufstreifenbasis, im Schnitt quer zur Laufrichtung des Fahrzeugluftreifens betrachtet, eine durchgehend radial nach außen hin gebogene Form aufweist. Mit anderen Worten wird erfindungsgemäß ein Fahrzeugluftreifen vorgeschlagen, bei dem die Materialdicke der Laufstreifenbasis in einem mittleren Bereich größer ist als in einem äußeren, zu den Seitenwänden hin orientierten Bereich. Die Laufstreifenbasis hat somit in einem Schnitt quer zur Laufrichtung des Fahrzeugluftreifens eine nach oben außen hin gebogene Form. Dies kann erreicht werden, indem entweder die Laufstreifenbasis in der Mitte dicker gemacht wird oder außen dünner.

Bei einem erfindungsgemäßen Fahrzeugluftreifen ist die Lauffläche in der Mitte durch die erhöhte Materialdicke, also durch den zusätzlichen Gummi, im Fahrbetrieb besser vor Schäden, zum Beispiel beim Überfahren eines Nagels, geschützt. Somit ist die Haltbarkeit und Lebensdauer eines derartigen Fahrzeugluftreifens erhöht.

Weiterhin kann dadurch, dass die Laufstreifenbasis nur in der Mitte eine erhöhte Materialdicke aufweist, vermieden werden, dass die Wärmeabfuhr in den Schulterbereichen durch die zusätzliche Isolationswirkung einer dickeren Gummischicht verringert wird. Das heißt, die Wärmeabfuhr in den Schulterbereichen wird nicht negativ beeinflusst. Der Fahrzeugluftreifen ist vor Hitzeschäden aufgrund zu geringer Wärmeabfuhr geschützt.

Eine vorteilhafte Ausgestaltung sieht vor, dass die Laufstreifenkappe über die gesamte Lauffläche eine konstante Profiltiefe aufweist. Dies kann ebenfalls die Lebensdauer des Fahrzeugluftreifens erhöhen, da herkömmlicher Weise der größte Gummiabrieb in der Mitte stattfindet.

Eine mögliche Ausgestaltung sieht vor, dass die Innenschicht eine konstante Materialdicke aufweist. Die Wirkung der luftdichten Innenschicht ist somit in allen Bereichen des Fahrzeugluftreifens gewährleistet. Alternativ liegt jedoch auch eine Ausgestaltung der Innenschicht mit einer variablen Materialdicke im Rahmen der Erfindung.

Insgesamt bietet der erfindungsgemäße Fahrzeugluftreifen den Vorteil, dass die Lebensdauer des Fahrzeugluftreifens erhöht wird, indem zum einen der Fahrzeugluftreifen im Bereich der Lauffläche vor Beschädigungen und zum anderen die Karkasse vor Hitzeschäden geschützt wird.

Die Erfindung wird nachfolgend anhand der beigefügten Zeichnungen näher erläutert. Das gezeigte Ausführungsbeispiel stellt dabei keine Einschränkung auf die dargestellte Variante dar, sondern dient lediglich der Erläuterung eines Prinzips der Erfindung.

Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: ausschnittsweise einen Schnitt quer zur Laufrichtung durch einen aus dem Stand der Technik bekannten Fahrzeugluftreifen im Bereich der Lauffläche,
- Figur 2:: ausschnittsweise einen Schnitt quer zur Laufrichtung durch einen erfindungsgemäßen Fahrzeugluftreifen im Bereich der Lauffläche in einer ersten Ausgestaltung, und
- Figur 3:: ausschnittsweise einen Schnitt quer zur Laufrichtung durch einen erfindungsgemäßen Fahrzeugluftreifen im Bereich der Lauffläche in einer weiteren Ausgestaltung.

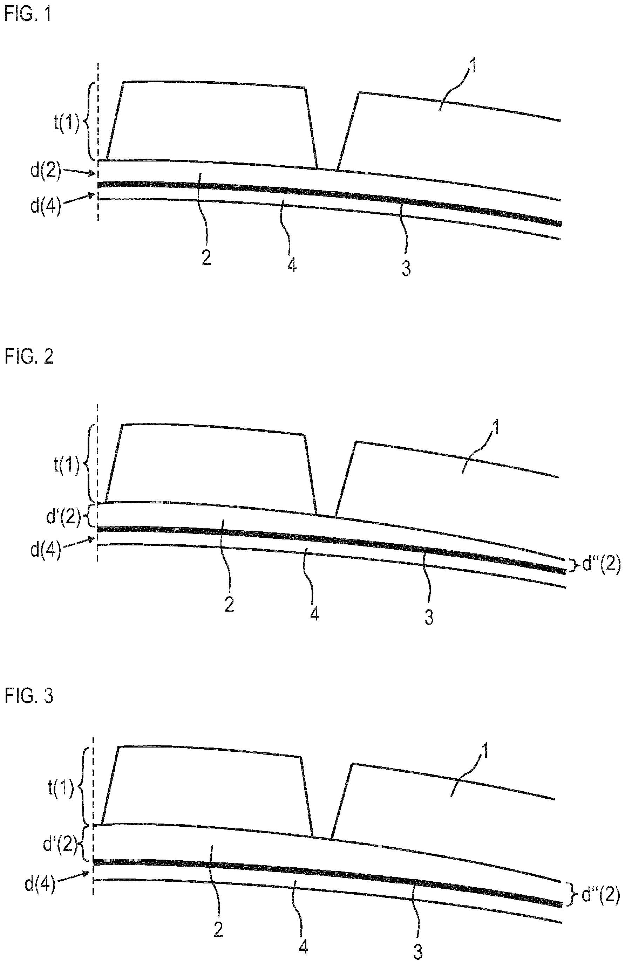

Die Figuren 1 bis 3 zeigen jeweils ausschnittsweise einen Schnitt quer zur Laufrichtung durch einen Fahrzeugluftreifen im Bereich der Lauffläche. In den hier gezeigten Ausschnitten des Fahrzeugluftreifens ist der Laufstreifen mit einer äußeren Laufstreifenkappe 1, welche die profilierte Lauffläche ausbildet, und einer inneren Laufstreifenbasis 2, sowie die darunter angeordnete Karkasse 3 gezeigt. Das Profil der Laufstreifenkappe 1 weist die Tiefe t(1) auf. Unterhalb der Karkasse 3 ist noch die luftdichte Innenschicht 4 angeordnet. Die Innenschicht 4 hat die Materialdicke d(4). Die Karkasse 3 umfasst, obwohl hier nicht im Detail gezeigt, mehrere in Gummi eingebettete Gewebeschichten und einen Gürtel, zum Beispiel aus Stahl, zur Verfestigung des Gewebes und des Gummis.

Gemäß dem Stand der Technik, siehe Figur 1, ist die Materialdicke d(2) der Laufstreifenbasis 2 über die gesamte Lauffläche beziehungsweise von innen nach außen gleich bleibend dick ausgebildet.

Die erfindungsgemäßen Fahrzeugluftreifen unterscheiden sich vom Stand der Technik, indem die Materialdicke d'(2) beziehungsweise d"(2) der Laufstreifenbasis 2 vom Zentrum der Lauffläche, hier mit der gestrichelten Linie gekennzeichnet, jeweils zu den Seitenwänden hin abnimmt. Dies kann durch zwei verschiedene Ausgestaltungen der Laufstreifenbasis 2 realisiert werden.

Die erste Ausgestaltung ist in der Figur 2 gezeigt. Hier ist die Materialdicke d"(2) in den Seitenbereichen gegenüber der Materialdicke d'(2) in der Mitte verringert. Die Materialdicke d'(2) in der Mitte entspricht somit der ursprünglichen Materialdicke d(2) gemäß Figur 1.

Die andere Ausgestaltung ist in der Figur 3 gezeigt. Hier ist die Materialdicke d'(2) in der Mitte gegenüber der Materialdicke d"(2) in den Seitenbereichen erhöht. Die Materialdicke d"(2) in den Seitenbereichen entspricht somit der ursprünglichen Materialdicke d(2) gemäß Figur 1.

Bei beiden Ausgestaltungen weist die Oberseite der Laufstreifenbasis 4 eine im Vergleich zur Unterseite stärker gebogene Form auf, während die Unterseite der Lauffläche annähernd gerade ist. Weiterhin ist die Materialdicke d(4) der Innenschicht 4 konstant ausgebildet.

### Bezugszeichenliste

- 1: Laufstreifenkappe
- 2: Laufstreifenbasis
- 3: Karkasse
- 4: Innenschicht

- d (2), d'(2), d"(2): Materialdicke der Laufstreifenbasis
- d (4): Materialdicke der Innenschicht
- t(1): Profiltiefe der Laufstreifenkappe

## Patentansprüche

1. Fahrzeugluftreifen zumindest aufweisend:
- einen Laufstreifen mit einer äußeren Laufstreifenkappe (1) mit einer profilierten Lauffläche und einer inneren Laufstreifenbasis (2),
- eine Karkasse (3),
- einen Wulstbereich mit einem Wulstkern,
- eine Innenschicht (4) und
- Seitenwände,
**dadurch gekennzeichnet, dass**
die Materialdicke (d'(2), d"(2)) der Laufstreifenbasis (2) vom Zentrum der Lauffläche jeweils zu den Seitenwänden hin derart kontinuierlich abnimmt, dass die Laufstreifenbasis (2), im Schnitt quer zur Laufrichtung des Fahrzeugluftreifens betrachtet, eine durchgehend radial nach außen hin gebogene Form aufweist.

2. Fahrzeugluftreifen nach Anspruch 1,
**dadurch gekennzeichnet, dass**
die Laufstreifenkappe (1) über die gesamte Lauffläche eine konstante Profiltiefe (t(1)) aufweist.

## Claims

1. Pneumatic vehicle tire, at least having:
- a tread comprising an outer tread cap (1) with a profiled tread and an inner tread base (2),
- a carcass (3),
- a bead region with a bead core,
- an inner layer (4) and
- sidewalls,
**characterized in that**
the material thickness (d'(2), d"(2)) of the tread base (2) decreases continuously from the centre of the tread toward each of the side walls such that the tread base (2) has, viewed in the section transverse to the running direction of the pneumatic vehicle tire, a continuously radially outwardly arched form.

2. Pneumatic vehicle tire according to Claim 1,
**characterized in that**
the tread cap (1) has a constant profile depth (t(1)) over the entire tread.

## Revendications

1. Pneumatique de véhicule, présentant au moins :
- une bande de roulement avec une couverture de bande de roulement extérieure (1) comprenant une surface de roulement profilée et une base de bande de roulement intérieure (2),
- une carcasse (3),
- une zone de talon avec une tringle,
- une couche intérieure (4) et
- des parois latérales,
**caractérisé en ce que**
l'épaisseur de matériau (d'(2), d"(2)) de la base de bande de roulement (2) diminue en continu depuis le centre de la surface de roulement à chaque fois jusqu'aux parois latérales de telle sorte que la base de bande de roulement (2), vu en coupe transversalement à la direction de roulement du pneumatique de véhicule, présente une forme cintrée radialement en continu vers l'extérieur.

2. Pneumatique de véhicule selon la revendication 1,
**caractérisé en ce que**
la couverture de bande de roulement (1) présente une profondeur de profilé constante (t(1)) sur toute la surface de roulement.
